# DEMANDE DE BREVET EUROPEEN

(11) **EP 1 679 213 A1**
(43) Date de publication de la demande: **12.07.2006**
(21) Numéro de dépôt: 05112675.3
(22) Date de dépôt: 21.12.2005
(51) Int. Cl.: B60J 5/06

(54) **Portière coulissante pour véhicule automobile, et véhicule automobile correspondant**

(30) Priorité: 11.01.2005 FR 0500279
(71) Demandeur: WAGON SAS, 79302 Bressuire Cedex (FR)
(72) Inventeur: Moreau, Stéphane, 79700 Le Temple (FR); Destouches, Nicolas, 35650 Le Rheu (FR)
(74) Mandataire: Bioret, Ludovic

(57) **Abrégé**

L'invention concerne une portière coulissante (10) pour véhicule automobile, prévue pour être déplaçable selon un axe de coulissement depuis une position fermée vers une position ouverte, et inversement, et présentant une partie inférieure (1) et une partie supérieure (2). Selon l'invention, lesdites parties inférieure (1) et supérieure (2) sont indépendantes ou désolidarisables, de façon qu'une première desdites parties inférieure (1) et supérieure (2) puisse être déplacée en coulissement selon ledit axe de coulissement, la seconde desdites parties inférieure (1) et supérieure (2) restant immobile.

## Description

Le domaine de l'invention est celui des véhicules automobiles. Plus précisément, l'invention concerne les portières coulissantes pour véhicules, susceptibles de fermer ou de libérer une ouverture ménagée dans la carrosserie.

Le terme « véhicule automobile » désigne tous les types de véhicules, y compris notamment les véhicules particuliers, les véhicules utilitaires et les camionnettes, les autocars et les camions.

De tels véhicules sont parfois équipés de portières (ou portes) coulissantes pour obturer les ouvertures.

L'invention s'applique à de telles portières coulissantes, en particulier, mais non exclusivement, pour l'obturation des ouvertures latérales avant ou arrière des véhicules automobiles. Elle peut s'appliquer également aux ouvertures arrière. Le terme « portière » (ou « porte ») englobe donc les deux ou quatre portières d'un véhicule, mais également par extension d'autres parties mobiles, telles que les hayons ou les portes arrière.

La technique la plus répandue consiste dans une porte coulissante guidée dans son déplacement par des rails solidarisés à la carrosserie du véhicule. L'utilisateur peut alors dégager l'ouverture obturée par la porte en faisant coulisser celle-ci, selon un plan essentiellement vertical.

On peut alors distinguer deux positions extrêmes, une position dans laquelle l'intégralité de l'ouverture est obturée par la porte et une position dans laquelle l'ouverture est dégagée, ainsi que, classiquement, les positions intermédiaires correspondant à un coulissement partiel de la portière.

La porte coulissante présente généralement une partie vitrée, qui peut être fixe ou mobile. Dans ce dernier cas, on prévoit qu'elle pénètre dans le caisson de porte, ce qui suppose la mise en oeuvre d'un mécanisme lourd et complexe dans ce caisson.

On obtient par ailleurs ainsi des portières d'aspect classique, alors qu'il y a une attente forte, à l'heure actuelle, pour de nouvelles formes, de nouveaux effets esthétiques et ergonomiques. Notamment, il est souvent souhaité de maximiser les surfaces vitrées, ainsi que les ouvertures dégagées lors de l'ouverture d'une portière, et d'éviter les solutions de continuité, pour conférer au véhicule un aspect lisse et aérodynamique.

L'invention a notamment pour objectif de pallier ces inconvénients de l'art antérieur.

Plus précisément, un objectif de l'invention est de fournir une nouvelle approche des portières coulissantes, permettant de créer de nouveaux effets esthétiques, et d'apporter de nouvelles fonctions, en matière d'ouverture et de fermeture.

Un autre objectif de l'invention est de proposer une technique offrant une bonne modularité qui reste simple de conception, relativement peu coûteuse, et d'un poids acceptable.

Un autre objectif de l'invention est de proposer une technique qui soit simple à monter dans le véhicule et qui ne nécessite pas de réglages particuliers, et notamment d'éviter la présence d'une vitre pénétrant dans le panneau de porte.

L'invention a également pour objectif de fournir une technique qui permette de réaliser des portières de véhicules dont l'aspect esthétique et l'ergonomie sont satisfaisants et permettant une obturation fiable et pérenne de l'ouverture.

Ces objectifs, ainsi que d'autres qui apparaîtront plus clairement par la suite, sont atteints à l'aide d'une portière coulissante pour véhicule automobile, prévue pour être déplaçable selon un axe de coulissement depuis une position fermée vers une position ouverte, et inversement, et présentant une partie inférieure et une partie supérieure.

Selon l'invention, les parties inférieure et supérieure sont indépendantes ou désolidarisables, de façon qu'une première des parties inférieure et supérieure puisse être déplacée en coulissement selon ledit axe de coulissement, la seconde des parties inférieure et supérieure restant immobile.

Ainsi, l'invention repose sur une approche tout à fait nouvelle et inventive consistant à réaliser une portière, pour obturer une ouverture ménagée dans la carrosserie d'un véhicule, comprenant deux parties (ou panneaux) mobiles, pouvant être déplacées indépendamment l'une par rapport à l'autre et parallèlement à l'axe de coulissement de la portière.

La portière peut ainsi prendre les positions fermée et ouverte, dans lesquelles elle obture ou libère intégralement l'ouverture, ainsi que les positions intermédiaires correspondant à un coulissement partiel de l'ensemble de la portière, comme le permettent classiquement les portières coulissantes formées d'un seul tenant selon des techniques connues de l'art antérieur.

En outre, contrairement aux techniques connues, la portière selon l'invention offre à l'utilisateur des modes d'obturations supplémentaires de l'ouverture.

En effet, le dispositif comprenant deux panneaux, l'utilisateur peut déplacer chacune des deux parties (ou panneaux) de la portière indépendamment l'une de l'autre, de façon que l'une seulement des deux parties (par exemple la partie inférieure) soit dans une position fermée, et que l'autre partie (la partie supérieure) soit dans une position d'ouverture. La portière du véhicule est dans un état de fermeture (ou d'obturation) partielle également.

Dans le cas où comme décrit précédemment c'est la partie inférieure qui est fermée et la partie supérieure qui est ouverte, l'état sera appelé état d'aération, cet état permettant d'aérer l'intérieur de l'habitacle en ouvrant la partie supérieure de la portière.

Ainsi, chacune des parties de la portière pouvant prendre au moins deux positions, la portière selon l'invention peut prendre au moins trois états,
- un état fermé, dans lequel lesdites parties inférieure et supérieure sont en position fermée ;
- un état ouvert, dans lequel lesdites parties inférieure et supérieure sont en position ouverte ;
- un état d'aération, dans lequel ladite partie inférieure est en position fermée et ladite partie supérieure en position ouverte.

Avantageusement, un quatrième état pourra également être obtenu, constituant un second état d'aération, dans lequel la partie inférieure est en position ouverte et la partie supérieure en position fermé.

Par ailleurs, d'autres états intermédiaires, correspondant à des déplacements (ou coulissements) intermédiaires des parties supérieure et inférieure entre leurs positions extrêmes d'ouverture et de fermeture, pourront également être obtenus.

Une telle portière pourra notamment former une portière latérale coulissante ou une portière arrière coulissante. La portière pourra se trouver dans un plan essentiellement vertical ou au contraire présenter un galbe particulier, de façon à correspondre au galbe du véhicule qu'elle équipe, tant du point de vue esthétique, que du point de vue de l'ergonomie du véhicule.

Les modalités d'ouverture de la modularité de libération de l'ouverture pourront en outre permettre un chargement plus aisé d'objets de grande dimension dans le véhicule.

En effet, dans un véhicule équipé d'une portière coulissante classique, le chargement d'un tel objet dans le véhicule conduira à laisser la portière dans la position dans laquelle l'ouverture est totalement libérée, de façon que l'objet puisse dépasser à l'arrière du véhicule lors de son transport. Une telle position n'est bien sûr pas optimale, notamment du point de vue de la sécurité des autres automobilistes. En outre, il est possible qu'un autre objet plus petit et situé également à l'arrière du véhicule tombe pendant le trajet ou soit volé lors d'un arrêt du véhicule.

Ainsi, l'utilisateur pourra, par exemple, ne libérer que la partie supérieure de l'ouverture, de façon que l'objet puisse être transporté dans le véhicule, tout en obturant la partie inférieure de l'ouverture, de façon à améliorer la sécurité des autres automobilistes et la sécurité des autres objets pouvant se trouver dans le véhicule.

De façon préférée, la portière coulissante comprend des moyens de guidage central en coulissement pour chacune des parties inférieure et supérieure, se déplaçant dans un premier rail de guidage s'étendant sur le véhicule au voisinage de la zone de liaison entre les parties inférieure et supérieure.

Un même rail central pourra ainsi permettre de guider le déplacement des parties inférieure et supérieure de la portière.

De façon avantageuse, la portière coulissante comprend des moyens de guidage d'extrémité en coulissement, pour au moins une des parties inférieure et supérieure, se déplaçant dans au moins un second rail de guidage, s'étendant sur le véhicule respectivement au voisinage de la région inférieure et de la région supérieure de la portière.

On pourra ainsi sans restriction prévoir que les parties inférieure et/ou supérieure sont guidées et/ou maintenues uniquement par un rail inférieur et/ou supérieur au niveau du bord inférieur de la partie inférieure et/ou du bord supérieur de la partie supérieure.

Il sera également possible de prévoir à la fois un guidage par un rail central, solidaire de la carrosserie du véhicule au niveau de la jonction entre les parties inférieures et supérieures, et au moins un rail guidant le bord opposé de la partie (ou panneau) de la portière, pour chacune ou pour une seule des parties.

Préférentiellement, les moyens de guidage mis en oeuvre comprennent au moins un élément appartenant au groupe comprenant :
- les galets porteurs ;
- les galets suiveurs ;
- les chapes ; et
- les bagues.

De façon avantageuse, des moyens de solidarisation/désolidarisation des parties inférieure et supérieure sont prévus de façon à pouvoir solidariser le déplacement si l'on souhaite ouvrir totalement la portière ou au contraire à le désolidariser si l'on ne souhaite ouvrir qu'une partie de la portière.

Les moyens de solidarisation des parties inférieures et supérieures pourront, de façon avantageuse, comprendre un système de gâche(s).

Avantageusement, les moyens de solidarisation peuvent être actionnés manuellement et/ou depuis une télécommande et/ou une commande sur une planche de bord.

De façon préférée, la partie inférieure (ou panneau inférieur) comprend un caisson de carrosserie. La face tournée vers l'extérieur est généralement réalisée en tôle et est opaque. Il est cependant bien sûr envisageable de réaliser celle-ci en plastique ou en polycarbonate transparent par exemple.

Selon un premier mode de réalisation avantageux de l'invention, la partie supérieure (ou panneau supérieur) est réalisé en tôle ou en matière plastique, pouvant classiquement également être opaque.

Ainsi, lorsque les deux panneaux sont opaques, l'obturation complète de l'ouverture correspond à l'occultation totale de celle-ci et protège l'habitacle du véhicule des regards et de la lumière extérieure.

Une telle portière totalement occultant pourra par exemple être utilisée pour équiper des véhicules utilitaires.

Selon un second mode de réalisation avantageux de l'invention, la partie supérieure comprend au moins une surface vitrée.

Différents modes de réalisation peuvent alors être envisagés la réalisation de la partie supérieure (ou panneau supérieur) comprenant une surface vitrée.

Selon une première approche, le panneau supérieur peut comprendre un cadre, en tôle ou en plastique par exemple, sur lequel est rapporté (par exemple par collage) une vitre dont la surface représente une partie seulement de la surface du panneau.

Selon une seconde approche, le cadre du panneau supérieur comprenant un cadre peut être recouvert par une vitre dont la surface correspond à la surface totale du panneau supérieur.

Enfm, selon une troisième approche, on pourra prévoir que le panneau supérieur soit formé uniquement d'une vitre, en verre ou en plastique et forme ainsi un panneau supérieur intégralement vitré.

Il sera bien sûr possible de prévoir que les deux parties inférieure et supérieure de la portière comprennent une surface vitrée.

Dans les différentes approches présentées ci-avant, on pourra bien sûr prévoir la présence de stores permettant d'occulter la surface vitrée.

Selon un mode de réalisation préférentiel de l'invention, le panneau supérieur vitré est affleurant avec le panneau inférieur, et avec la carrosserie du véhicule dans l'état fermé.

La technique selon l'invention permet ainsi de réaliser une portière de véhicule automobile présentant un aspect affleurant (« flush » en anglais) sans même qu'un joint d'étanchéité apparaisse.

De telles portières sont adaptées notamment pour équiper des véhicules luxueux tels que des monospaces par exemple.

De façon avantageuse, au moins un montant de la carrosserie du véhicule porte un joint d'étanchéité venant se plaquer contre la partie supérieure et/ou partie inférieure, lorsque la portière est dans ledit état fermé.

Avantageusement, la partie supérieure et/ou partie inférieure porte sur au moins un bord de la face tournée vers l'intérieur du véhicule, un joint d'étanchéité.

Les joints assurent ainsi l'étanchéité de la portière lorsque celle-ci est dans l'état fermé.

De façon préférentielle, le coulissement de la partie supérieure et/ou partie inférieure est actionné manuellement et/ou par des moyens de motorisation contrôlés depuis une télécommande et/ou une commande sur une planche de bord.

De façon avantageuse, au moins une gâche permet de verrouiller la partie supérieure et/ou la partie inférieure dans l'état fermé, la gâche étant contrôlée depuis une commande distante, reportée par exemple sur une planche de bord.

On pourra prévoir avantageusement que la portière coulissante coopère avec au moins un dispositif appartenant au groupe comprenant :
- un dispositif de blocage permettant d'arrêter le coulissement de la partie supérieure et/ou partie inférieure;
- un dispositif de protection d'une trappe à carburant ;
- un dispositif de protection d'une vitre de custode ;
- un dispositif anti-basculement de la partie supérieure et/ou partie inférieure ;
- un dispositif d'amortissement de la fin de course de la partie supérieure et/ou partie inférieure.
L'invention concerne également les véhicules automobiles équipés par au moins une telle portière coulissante.

L'invention concerne également un véhicule automobile comprenant au moins une telle portière coulissante.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue simplifiée et schématisée, d'une portière coulissante pour véhicule selon l'invention, la portière étant dans l'état fermé ;
- la figure 2 présente un dispositif d'obturation selon la figure 1 dans l'état ouvert ;
- les figures 3A et 3B représentent également une portière selon la figure 1, respectivement dans l'état d'aération et dans un état d'ouverture intermédiaire des panneaux.

L'invention présente donc une nouvelle technique permettant de réaliser une portière (ou porte) coulissante pour véhicule pouvant former, par exemple, porte latérale, porte arrière, hayon, Selon l'invention, la portière comprend deux panneaux pouvant coulisser indépendamment l'un de l'autre ou simulatnément selon des directions parallèles, et offre ainsi une grande modularité d'obturation à l'utilisateur.

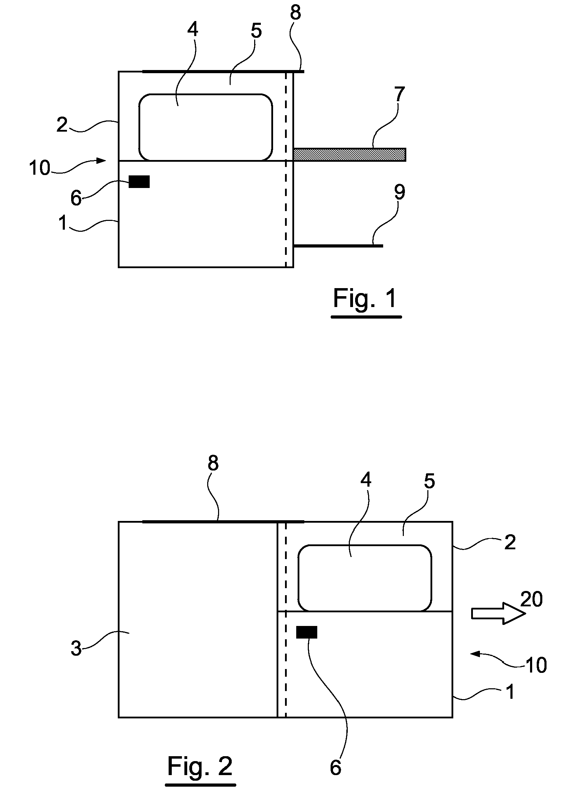

La figure 1 est une vue de principe, volontairement schématique et simplifié d'une portière selon l'invention, dans l'état de fermeture totale d'une ouverture 3 (en conséquence non visible sur la figure 1) ménagée dans la carrosserie d'un véhicule.

La portière 10 comprend un panneau inférieur (ou partie inférieure) 1 et un panneau supérieur 2 (ou partie supérieure).

Avantageusement, le panneau inférieur 1 est formé d'un caisson de carrosserie comprenant classiquement un panneau de carrosserie sur sa face tournée vers l'extérieur du véhicule et à l'intérieur, d'un habillage ou d'une doublure.

Le panneau inférieur 1 peut comprendre également, classiquement, différents renforts (contre les chocs frontaux, latéraux,...), des moyens de fermeture (gâche, tirant,...).

Le panneau supérieur 2 présente avantageusement une vitre 4 pouvant être collée sur un cadre 5 réalisé en tôle ou en plastique par exemple. Il pourra également être prévu que le panneau supérieur 2 soit formé intégralement d'une vitre 4.

Cela permet d'augmenter la surface vitrée du dispositif et de réduire les coûts de fabrication, puisque cela permet de s'affranchir de la réalisation d'un cadre de vitre 5 présentant un logement adapté pour rapporter la vitre 4.

Dans ce cas, le panneau supérieur 2 (et par conséquent la vitre 4) est de préférence flush avec le panneau inférieur 1 et la carrosserie dans laquelle est ménagée l'ouverture.

Il est cependant bien sûr envisageable que le panneau supérieur 2 soit réalisé en tôle.

La figure 2 illustre la portière 10 selon la figure 1 dans l'état dans lequel l'ouverture 3 est totalement libérée.

Des références numériques identiques désignent des éléments identiques sur les figures 1, 2, 3A et 3B.

Lors du passage de l'état fermé à l'état ouvert, le coulissement des deux panneaux 1 et 2 a été actionné, manuellement (au moyen de la poignée 6 équipant le panneau inférieur 1) ou au moyen d'une télécommande et/ou d'une commande située sur la table de bord du véhicule, selon la direction indiquée par la flèche 20.

Une poignée équipant le panneau supérieur 2 pourra bien sûr également être prévue, de façon à permettre le déplacement manuel de celui-ci.

Le déplacement des panneaux 1 et 2 selon la direction 20 a pu se faire de façon solidaire ou de façon indépendante, comme cela sera illustré par la suite.

Il sera possible de prévoir des moyens de solidarisation permettant de solidariser ou de désolidariser le déplacement des deux panneaux 1, 2, au moyen d'un système de gâche(s) par exemple.

Ces moyens de solidarisation pourront être actionnés manuellement et/ou depuis une télécommande et/ou une commande sur une planche de bord du véhicule.

Le coulissement des panneaux 1, 2 selon la direction 20 est guidé par au moins un rail de guidage.

Avantageusement, un rail de guidage central 7, situé à la hauteur correspondant à la jonction du bord supérieur du panneau inférieur 1 et du bord inférieur du panneau supérieur 2, permet de guider le déplacement des panneaux inférieur 1 et supérieur 2.

De façon préférée, ce rail 7 est un rail complexe solidaire de la carrosserie du véhicule et permettant le guidage de chariots solidaires de chacun des panneaux 1, 2 et fixés au niveau des bords adjacents au rail central 7.

Un tel rail peut par exemple être un rail en forme de U comprenant une paroi centrale supplémentaire, parallèle aux deux parois parallèles du rail en U, de façon à former deux rails adjacents.

Tel qu'illustré par les figures 1, 2, 3A et 3B, un rail supérieur 8 peut être prévu pour guider le déplacement du bord supérieur du panneau supérieur 2, ainsi qu'un rail inférieur 9 guidant le déplacement du bord inférieur du panneau inférieur 1.

Lorsque la vitre 4 est fixée sur un cadre 5, les chariots pourront être montés sur le cadre 5, ainsi qu'une gâche de verrouillage du panneau 2 dans la position d'obturation. En revanche, lorsque le panneau 2 est formé intégralement d'une vitre 4, ces éléments pourront être rapportés directement sur la vitre 4 réalisée en verre ou en plastique par exemple.

Les rails de guidage permettent, d'une façon générale, le guidage et/ou le maintien des panneaux 1, 2 lors de leur coulissement, et sont préférentiellement solidaires de la carrosserie du véhicule.

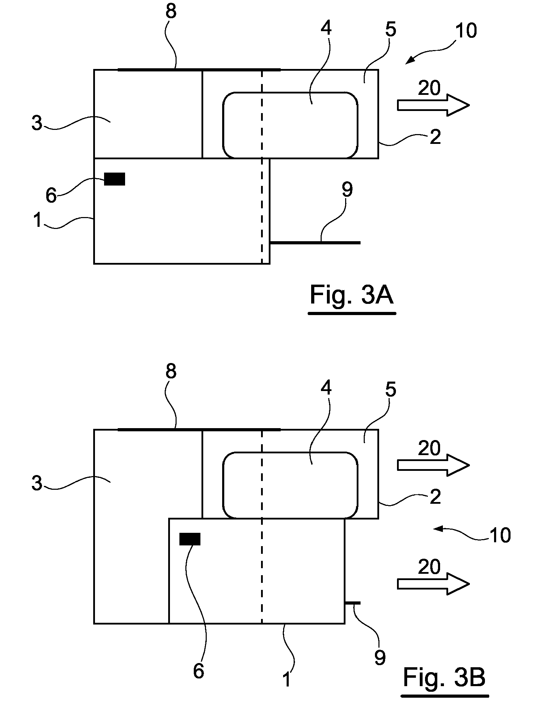

Les figures 3A et 3B illustrent la portière 10 dans des états d'obturation partielle de l'ouverture 3, que les portes coulissantes de véhicule connues dans l'art antérieur ne permettent pas d'obtenir.

La figure 3A, illustre l'état d'aération de la portière dans lequel panneau inférieur 1 obture la partie inférieure de l'ouverture 3, et le panneau supérieur 2 ayant coulissé latéralement selon la flèche 20 et indépendamment du panneau inférieur 1, libère la partie supérieure de l'ouverture.

Ce mode d'obturation de l'ouverture permet d'aérer l'intérieur du véhicule et pourra permettre à l'utilisateur le chargement d'un bagage encombrant, dépassant par la partie non obturée de l'ouverture, tout en permettant d'obturer la partie inférieure de l'ouverture 3 par le panneau inférieur 1, de façon à limiter l'accès à l'intérieur du véhicule.

Ainsi, lorsque le panneau supérieur 2 correspond à un panneau intégralement vitré, l'opération classique "d'ouverture de la vitre" afin d'aérer l'intérieur du véhicule se fait par un coulissement latéral du panneau supérieur 2, parallèlement à la direction de coulissement de la portière 10 et donc du panneau inférieur 1.

Au contraire, selon les portes coulissantes connues dans l'art antérieur, lorsque qu'une vitre mobile en coulissement équipe la partie supérieure de la porte, celle-ci coulisse vers le caisson inférieur, perpendiculairement à la direction de coulissement de la porte.

Tel que présenté par la figure 3B, le panneau inférieur 1 a également coulissé selon la même direction 20 que le panneau supérieur 2 pour libérer une majeure partie de l'ouverture 3.

Un joint d'étanchéité pourra classiquement être prévu pour assurer l'étanchéité de la portière dans son état fermé ou partiellement fermé. Celui-ci peut être monté sur des montants de la carrosserie encadrant l'ouverture 3 de façon qu'ils se collent aux bords des panneaux 1, 2 venant contre ces montants lorsqu'ils sont dans la position fermée. Un joint d'étanchéité pourra également être prévu sur le bord de la face interne des panneaux 1, 2.

En outre, différents dispositifs pourront être associés à la portière coulissante, tel que par exemple un dispositif de blocage permettant d'arrêter le coulissement du panneau inférieur 1 et/ou du panneau supérieur 2. Un tel dispositif pourra comprendre une butée d'arrêt contre laquelle butte le bord d'un des panneaux coulissants en fin de course d'ouverture, ou une butée d'arrêt située à l'intérieur d'un rail de guidage d'un panneau et bloquant le déplacement d'un chariot en fm de course d'ouverture.

Un système d'arrêt multi-position des panneaux supérieur et/ou inférieur, tel qu'un multi-crantage des rails par exemple, pourra également être prévu, éventuellement en complément d'une butée d'arrêt, de façon à permettre l'arrêt du coulissement des panneaux dans différentes positions.

En outre, on pourra également prévoir un système d'amortissement de la portière lorsque celle-ci arrive en butée.

Il sera également possible de prévoir un dispositif de protection de la trappe à carburant ou de protection de la vitre de custode, notamment lorsque la portière coulissante forme une portière latérale, de façon à éviter que le où les panneaux ne coulisse(nt) alors que la trappe et/ou la vitre de custode sont ouvertes. Un tel dispositif de protection de la trappe à carburant est décrit dans document de brevet FR-0408496.

On pourra également prévoir la présence d'un dispositif anti-basculement comprenant une butée empêchant le soulèvement d'une extrémité d'un panneau lorsque qu'il bute contre une butée d'arrêt en fin de course d'ouverture. Un tel dispositif anti-basculement est décrit par exemple dans le document de brevet FR-0408497.

## Revendications

1. Portière coulissante (10) pour véhicule automobile, prévue pour être déplaçable selon un axe de coulissement depuis une position fermée vers une position ouverte, et inversement, et présentant une partie inférieure (1) et une partie supérieure (2),
**caractérisée en ce que** lesdites parties inférieure (1) et supérieure (2) sont indépendantes ou désolidarisables, de façon qu'une première desdites parties inférieure et supérieure puisse être déplacée en coulissement selon ledit axe de coulissement, la seconde desdites parties inférieure et supérieure restant immobile.

2. Portière coulissante selon la revendication 1, **caractérisée en ce que** chacune desdites parties inférieure (1) et supérieure (2) peut prendre une position fermée et une position ouverte, et **en ce que** ladite portière (10) peut prendre au moins trois états :
- un état fermé, dans lequel lesdites parties inférieure (1) et supérieure (2) sont en position fermée ;
- un état ouvert, dans lequel lesdites parties inférieure (1) et supérieure (2) sont en position ouverte ;
- un état d'aération, dans lequel ladite partie inférieure (1) est en position fermée et ladite partie supérieure (2) en position ouverte.

3. Portière coulissante selon l'une quelconque des revendications 1 et 2, **caractérisée en ce qu'**elle comprend des moyens de guidage central en coulissement pour chacune desdites parties inférieure (1) et supérieure (2), se déplaçant dans un premier rail de guidage (7) s'étendant sur ledit véhicule au voisinage de la zone de liaison entre lesdites parties inférieure (1) et supérieure (2).

4. Portière coulissante selon l'une quelconque des revendications 1 à 3, **caractérisée en ce qu'**elle comprend des moyens de guidage d'extrémité en coulissement, pour au moins une desdites parties inférieure (1) et supérieure (2), se déplaçant dans au moins un second rail de guidage (8, 9), s'étendant sur ledit véhicule respectivement au voisinage de la région inférieure et de la région supérieure de ladite portière (10).

5. Portière coulissante selon l'une quelconque des revendications 3 et 4, **caractérisée en ce que** lesdits moyens de guidage comprennent au moins un élément appartenant au groupe comprenant :
- les galets porteurs ;
- les galets suiveurs ;
- les chapes ; et
- les bagues.

6. Portière coulissante selon l'une quelconque des revendications 1 à 5, **caractérisée en ce qu'**elle comprend des moyens de solidarisation/désolidarisation desdites parties inférieure (1) et supérieure (2).

7. Portière coulissante selon l'une quelconque des revendications 1 à 6, **caractérisée en ce que** ladite partie inférieure (1) comprend un caisson de carrosserie.

8. Portière coulissante selon l'une quelconque des revendications 1 à 7, **caractérisée en ce que** ladite partie supérieure (2) comprend au moins une surface vitrée (4).

9. Portière coulissante selon la revendication 8, **caractérisée en ce que** ladite surface vitrée (4) est affleurante avec ladite partie inférieure (1), et avec la carrosserie dudit véhicule dans ledit état fermé.

10. Portière coulissante selon l'une quelconque des revendications 1 à 9, **caractérisée en ce qu'**au moins un montant de la carrosserie du véhicule porte un joint d'étanchéité venant se plaquer contre ladite partie supérieure (2) et/ou partie inférieure (1), lorsque ladite portière (10) est dans ledit état fermé.

11. Portière coulissante selon l'une quelconque des revendications 1 à 10, **caractérisée en ce que** ladite partie supérieure (2) et/ou partie inférieure (1) porte sur au moins un bord de la face tournée vers l'intérieur dudit véhicule, un joint d'étanchéité.

12. Portière coulissante selon l'une quelconque des revendications 1 à 11, **caractérisée en ce que** le coulissement de ladite partie supérieure (2) et/ou partie inférieure (1) est actionné manuellement et/ou par des moyens de motorisation contrôlés depuis une télécommande et/ou une commande sur une planche de bord.

13. Portière coulissante selon l'une quelconque des revendications 1 à 12, **caractérisée en ce qu'**au moins une gâche permet de verrouiller ladite partie supérieure (2) et/ou ladite partie inférieure (1) dans ledit état fermé, et **en ce que** ladite gâche est contrôlée depuis une commande distante, reportée par exemple sur une planche de bord.

14. Portière coulissante selon l'une quelconque des revendications 1 à 13, **caractérisée en ce qu'**elle coopère avec au moins un dispositif appartenant au groupe comprenant :
- un dispositif de blocage permettant d'arrêter le coulissement de ladite partie supérieure et/ou partie inférieure;
- un dispositif de protection d'une trappe à carburant ;
- un dispositif de protection d'une vitre de custode ;
- un dispositif anti-basculement de ladite partie supérieure et/ou partie inférieure ;
- un dispositif d'amortissement de la fin de course de ladite partie supérieure et/ou partie inférieure.

15. Véhicule automobile **caractérisé en ce qu'**il comprend au moins une portière coulissante (10) selon l'une quelconque des revendications 1 à 14.
